(19) Europäisches Patentamt
European Patent Office
Office européen des brevets

(11) EP 1 472 302 B1

(12) **EUROPEAN PATENT SPECIFICATION**

(45) Date of publication and mention of the grant of the patent:
**21.05.2008 Bulletin 2008/21**

(21) Application number: **01999596.8**

(22) Date of filing: **26.11.2001**

(51) Int Cl.:
***C08G 64/30*** *(2006.01)*

(86) International application number:
**PCT/US2001/044227**

(87) International publication number:
**WO 2002/046272 (13.06.2002 Gazette 2002/24)**

(54) **POLYCARBONATE RESIN COMPOSITION FOR OPTICAL APPLICATIONS AND METHODS FOR MANUFACTURE THEREOF**

POLYCARBONATHARZZUSAMMENSETZUNG FÜR OPTISCHE ANWENDUNGEN UND VERFAHREN ZU IHRER HERSTELLUNG

COMPOSITION DE RESINE DE POLYCARBONATE POUR DES APPLICATIONS OPTIQUES ET SON PROCEDE DE FABRICATION

(84) Designated Contracting States:
**BE DE**

(30) Priority: **28.11.2000 JP 2000361844**

(43) Date of publication of application:
**03.11.2004 Bulletin 2004/45**

(73) Proprietor: **GENERAL ELECTRIC COMPANY**
**Schenectady, NY 12345 (US)**

(72) Inventors:
- **ISHIDA, Hiromi**
**Moka-shi**
**Tochigi-ken 321-4341 (JP)**
- **INOUE, Kazushige**
**Moka City 321-4362 (JP)**
- **SHIMODA, Tomoaki**
**3-2, Yushudaihigashi**
**Ichihara City,Chiba (JP)**
- **KIMURA, Takato**
**1-1, Yushudai Higashi**
**Ichihara City (JP)**
- **MINAMI, Satoru**
**Yushudai-Nishi**
**Ichihara City (JP)**
- **COSTA, Lorenza, A.**
**30008 Murcia (ES)**
- **HATANO, Akira**
**Tochigi-ken 321-0132 (JP)**

(74) Representative: **Modiano, Micaela Nadia et al**
**Modiano Josif Pisanty & Staub Ltd**
**Thierschstrasse 11**
**80538 München (DE)**

(56) References cited:
**EP-A- 0 561 629**
**EP-A- 0 719 814**

- **PATENT ABSTRACTS OF JAPAN vol. 016, no. 298 (C-0958), 2 July 1992 (1992-07-02) & JP 04 081457 A (MITSUBISHI KASEI CORP), 16 March 1992 (1992-03-16) cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 472 302 B1

## Description

### BACKGROUND OF THE INVENTION

Polycarbonates have excellent mechanical characteristics including shock resistance, heat resistance, and transparency. Polycarbonates are widely used in a variety of mechanical components, including optical disks and automobile parts. These materials appear to have particularly high potential for optical memory disks, optical fibers, lenses, and other optical applications.

A polycarbonate resin composition designed for optical applications is expected to have good color tone stability and high discoloration resistance when heated during molding.

Adding various phosphorous acid ester compounds to polycarbonates in the manner described in JP (Kokai) 10-60247 and 4-81457 has been proposed as an attempt to improve the color tone stability of such polycarbonates during molding, however, neither is applicable to melt polycondensation reactions. Producing polycarbonates with improved color tone stability by adding an acidic compound to the reaction product obtained by melt polycondensation is described in JP (Kokai) 4-175368, 4-328156, and 5-262969.

A polycarbonate resin composition that exhibits color tone stability at high temperatures can be obtained by adding an acidic compound in a specific amount when various release agents are admixed into the polycarbonate, as disclosed in JP (Tokugan) 2000-169690. The mold is however, contaminated during molding and needs to be cleaned making continuous molding difficult to implement.

### BRIEF SUMMARY OF THE INVENTION

Disclosed herein is a method for manufacturing a polycarbonate composition. The method comprises: melting bisphenol and carbonic acid diester to form a melt, polycondensing the melt in the presence of a catalyst, to form a polycondensed mixture, adding a sulfur-containing compound to the polycondensed mixture, stirring the mixture, adding phosphorous acid, a second sulfur-containing acidic compound, an alcohol compound containing ester groups, and water to form a polycarbonate composition, and kneading the polycarbonate composition.

The above described and other features are exemplified by the following figures and detailed description.

### DETAILED DESCRIPTION OF THE INVENTION

A method for manufacturing a polycarbonate composition comprising melting components, wherein the components comprise bisphenol and carbonic acid diester, polycondensing the bisphenol and the carbonic acid diester in the presence of a catalyst, to form a polycondensed mixture, adding a sulfur-containing compound to the polycondensed mixture, stirring the mixture, adding phosphorous acid, a second sulfur-containing acidic compound, an alcohol compound containing ester groups, and water to form a polycarbonate composition, and kneading the polycarbonate composition.

The bisphenol used as a starting material during the melt polycondensation of polycarbonate is preferably any compound represented by formula [I]:

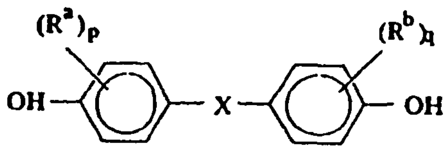

$\cdots$[I]

wherein $R^a$ and $R^b$, which may be the same or different, are halogen atoms or monovalent hydrocarbon groups; *p* and *q* are integers from 0 to 4; X is:

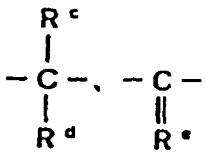

wherein, $R^c$ and $R^d$ are hydrogen atoms or monovalent hydrocarbon groups ($R^c$ and $R^d$ may also form ring structures); and $R^e$ is a bivalent hydrocarbon group).

Bisphenols expressed by formula [I] include
1,1-bis(4-hydroxyphenyl)methane, 1,1-bis(4-hydroxyphenyl)ethane,
2,2-bis(4-hydroxyphenyl)propane (hereinafter "bisphenol A"),
2,2-bis(4-hydroxyphenyl)butane, 2,2-bis(4-hydroxyphenyl)octane,
1,1-bis(4-hydroxyphenyl)propane, 1,1-bis(4-hydroxyphenyl) n-butane,
bis(4-hydroxyphenyl)phenyhnethane, 2,2-bis (4-hydroxy-1-methylphenyl)propane,
1,1-bis(4-hydroxy-t-butylphenyl)propane, 2,2-bis(4-hydroxy-3-bromophenyl)propane, and other bis(hydroxyaryl)alkanes; and
1,1-bis(4-hydroxyphenyl)cyclopentane, 1,1-bis(4-hydroxyphenyl)cyclohexane, and other bis(hydroxyaryl)cycloalkanes; and the like, as well as combinations comprising at least one of the foregoing bisphenols.

Other suitable bisphenols include those in which the X in the above formula is -O-, -S-, -SO-, or $-SO_2-$ such as 4,4'-dihydroxydiphenyl ether,
4,4'-dihydroxy-3,3'-dimethylphenyl ether, and other bis(hydroxyaryl) ethers;
4,4'-dihydroxydiphenyl sulfide, 4,4'-dihydroxy-3,3'-dimethylphenyl sulfide, and other bis(hydroxydiaryl) sulfides; 4,4'-dihydroxydiphenyl sulfoxide, 4,4'-dihydroxy-3,3'-dimethyldiphenyl sulfoxide, and other bis(hydroxydiaryl) sulfoxides;
4,4'-dihydroxydiphenyl sulfone, 4,4'-dihydroxy-3,3'-dimethyldiphenyl sulfone, and other bis(hydroxydiaryl) sulfones; and the like, as well as combinations comprising at least one of the foregoing bisphenols

Additionally, the bisphenol used may be any compound represented by formula [II]:

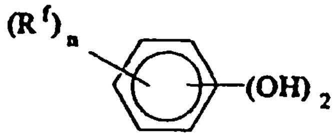

[II]

wherein $R^f$ is a halogen atom, a $C_1$-$C_{10}$ hydrocarbon group, or a halogen-substituted hydrocarbon group; and n is an integer from 0 to 4, with $R^f$ being the same or different when *n* is 2 or greater. Examples of the bisphenols expressed by formula [II] include resorcin (e.g., 3-methylresorcin, 3-ethylresorcin, 3-propylresorcin, 3-butylresorcin,3-*t*-butylresorcin, 3-phenylresorcin, 3-cumylresorcin, 2,3,4,6-tetrafluororesorcin, 2,3,4,6-tetrabromoresorcin, and other substituted resorcins); catechol; hydroquinone (e.g., 3-methylhydroquinone, 3-ethylhydroquinone, 3-propylhydroquinone, 3-butylhydroquinone, 3-*t*-butylhydroquinone, 3-phenylhydroquinone, 3-cumylhydroquinone, 2,3,5,6-tetramethylhydroquinone, 2,3,5,6-tetra-t-butylhydroquinone, 2,3,5,6-tetrafluorohydroquinone, 2,3,5,6-tetrabromohydroquinone, and other substituted hydroquinones), and the like, as well as combinations comprising at least one of the foregoing bisphenols.

Another suitable bisphenol is 2,2,2',2'-tetrahydro-3,3,3',3'-tetrarnethyl-1,1'-spirobi-[1H-indene]-6,6',diol expressed by formula [III]:

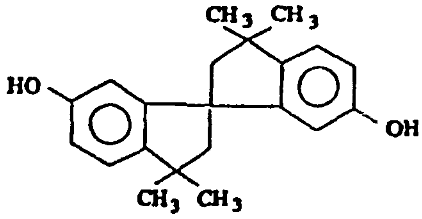

[III]

Of these compounds, the bisphenols expressed by formula [I] above are preferred, and bisphenol A is particularly preferred.

Examples of suitable carbonic acid diesters include diphenyl carbonate, ditolyl carbonate, bis(chlorophenyl) carbonate, *m*-cresyl carbonate, dinaphthyl carbonate, bis(diphenyl) carbonate, diethyl carbonate, dimethyl carbonate, dibutyl carbonate, dicyclohexyl carbonate, and the like, as well as combinations comprising at least one of the foregoing acid diesters, of which diphenyl carbonate is most preferred.

The carbonic acid diesters may also contain dicarboxylic acids or dicarboxylic acid esters. Specifically, the carbonic acid diesters may contain dicarboxylic acids or dicarboxylic acid esters in an amount of less than or equal to about 50 mol%, preferably less than or equal to about 30 mol%.

Examples of such dicarboxylic acids or dicarboxylic acid esters include aromatic dicarboxylic acids (esters) such as terephthalic acid, isophthalic acid, diphenyl terephthalate, and diphenyl isophthalate; aliphatic dicarboxylic acids (esters) such as succinic acid, glutaric acid, adipic acid, pimelic acid, suberic acid, azelaic acid, sebacic acid, decanedioic acid, dodecanedioic acid, diphenyl sebacate, diphenyl decanedioate, and diphenyl dodecanedioate; and alicyclic dicarboxylic acids (esters) such as cyclopropane dicarboxylic acid, 1,2-cyclopropane dicarboxylic acid, 1,3-cyclopropane dicarboxylic acid, 1,2-cyclopentane dicarboxylic acid, 1,3-cyclopentane dicarboxylic acid, 1,2-cyclohexane dicarboxylic acid, 1,3-cyclohexane dicarboxylic acid, 1,4-cyclohexane dicarboxylic acid, diphenyl cyclopropane dicarboxylate, diphenyl 1,2-cyclopropane dicarboxylate, diphenyl 1,3-cyclobutane dicarboxylate, diphenyl 1,2-cyclopentane dicarboxylate, diphenyl 1,3-cyclopentane dicarboxylate, diphenyl 1,2-cyclohexane dicarboxylate, diphenyl 1,3-cyclohexane dicarboxylate, and diphenyl 1,4-cyclohexane dicarboxylate; and the like, as well as combinations comprising at least one of the foregoing acids or acid esters.

The bisphenols and carbonic acid diesters may be filtered in a pre-molten state.

Preferably, the amount of carbonic acid diesters added, per mole of bisphenol, is less than or equal to about 1.30 mol, with less than or equal to about 1.20 preferred. Also, preferred is an amount of carbonic acid ester of greater than or equal to about 1.00 mol, with greater than or equal to about 1.01 mol more preferred, per mole of bisphenol.

A compound catalyst is added during the polycondensation reaction. The catalyst may comprise an alkaline compound. Suitable alkaline compound catalysts include alkaline-earth metal compounds, alkali metal compounds, and the like, as well as combinations comprising at least one of the foregoing alkaline compounds.

Suitable alkaline-earth metal compounds comprise organic acid salts, inorganic acid salts, oxides, hydroxides, hydrides, alcoholates, barium hydroxide, magnesium hydroxide, strontium hydroxide, barium bicarbonate, magnesium bicarbonate, strontium bicarbonate, calcium carbonate, barium carbonate, magnesium carbonate, strontium carbonate, calcium acetate, barium acetate, magnesium acetate, strontium acetate, calcium stearate, barium stearate, magnesium stearate, strontium stearate, and the like, as well as combinations comprising at least one of the foregoing compounds.

Suitable alkali metal compounds comprise sodium hydroxide, potassium hydroxide, lithium hydroxide, sodium bicarbonate, potassium bicarbonate, lithium bicarbonate, sodium carbonate, potassium carbonate, lithium carbonate, sodium acetate, potassium acetate, lithium acetate, sodium stearate, potassium stearate, lithium stearate, sodium borohydride, lithium borohydride, sodium phenyl boron, sodium benzoate, potassium benzoate, lithium benzoate, disodium hydrogen phosphate, dipotassium hydrogen phosphate, dilithium hydrogen phosphate, disodium (dipotassium, dilithium) salts of bisphenol A, and sodium (potassium, lithium) salts of phenols, and combinations comprising at least one of the foregoing compounds.

The compound catalyst can be employed in an amount, per mol of bisphenol during the polycondensation reaction, of less than or equal to about $1 \times 10^{-3}$ mol, with less than or equal to about $2 \times 10^{-6}$ mol preferred, and less than or equal to $8 \times 10^{-7}$ mol more preferred. Also preferred is an amount of compound catalyst, per mol of bisphenol during the polycondensation reaction, of greater than or equal to about $1 \times 10^{-8}$ mol, with greater than or equal to about $1 \times 10^{-7}$ mol more preferred. When an alkaline (earth) metal compound is added in advance of the bisphenol (starting material for the fusion polycondensation reaction), the amount in which the alkaline (earth) metal compound is present during the fusion polycondensation reaction should be controlled such that the amount added per mole of the bisphenol remains within the aforementioned range.

The compound catalyst may further comprise a basic compound, e.g., a fusion polycondensation catalyst. The basic compound may be a nitrogen-containing basic compound readily decomposable or volatilizable at high temperatures, such as tetramethylammonium hydroxide ($Me_4NOH$), tetraethylammonium hydroxide ($Et_4NOH$), tetrabutylammonium hydroxide ($Bu_4NOH$), trimethylbenzylammonium hydroxide ($\varphi$-$CH_2(Me)_3NOH$), and other ammonium hydroxides having alkyl, aryl, and aralkyl groups; trimethylamine, triethylamine, dimethylbenzylamine, triphenylamine, and other tertiary amines; secondary amines expressed as $R_2NH$ (wherein R is an alkyl group such as methyl or ethyl; an aryl group such as phenyl or tolyl, and the like); primary amines expressed as $RNH_2$ (wherein R is an alkyl group such as methyl or ethyl; an aryl group such as phenyl or tolyl, and the like); 4-dimethylaminopyridine, 4-diethylaminopyridine, 4-pyrrolidinopyridine, and other pyridines; 2-methylimidazole, 2-phenylimidazole, and other imidazoles; and ammonia, tetramethylammonium borohydride ($Me_4NBH_4$), tetrabutylammonium borohydride ($Bu_4NBH_4$), tetrabutylammonium tetraphenyl borate ($Bu_4NBPh_4$), tetramethylammonium tetraphenyl borate ($Me_4NBPl_{T4}$), and other basic salts; and the like,

as well as combinations comprising at least one of the foregoing basic compounds, with the tetraalkylammonium hydroxides preferred.

The nitrogen-containing basic compounds are used in amounts, per mol of bisphenol, of less than or equal to about $1 \times 10^{-1}$ mol, with less than or equal to about $1 \times 10^{-2}$ mol preferred. Also preferred is an amount of greater than or equal to $1 \times 10^{-6}$ mol, with greater than or equal to about $1 \times 10^{-5}$ mol more preferred.

The compound catalyst may further comprise a boric acid compound. Suitable boric acid compounds include boric acid and borate esters, and the like, as well as combinations comprising at least one of the foregoing compounds. Suitable borate esters are any compound represented by the following general formula:

$$B(OR)_n(OH)_{3-n}$$

wherein, R is methyl, ethyl, or another alkyl; phenyl or another aryl and the like; and *n* is 1, 2, or 3. Suitable borate esters comprise trimethyl borate, triethyl borate, tributyl borate, trihexyl borate, triheptyl borate, triphenyl borate, tritolyl borate, trinaphthyl borate, and the like, as well as combinations comprising at least one of the foregoing borate esters.

The boric acid compound should be used in an amount, per mol of bisphenol, of less than or equal to about $1x\ 10^{-1}$ mol, with less than or equal to about $1\ x\ 10^{-2}$ mol preferred, and less than or equal to about $1\ x\ 10^{-4}$ mol more preferred. Also preferred is an amount of boric acid of greater than or equal to about $1 \times 10^{-8}$ mol, with greater than or equal to about $1\ x\ 10^{-7}$ mol more preferred, and greater than or equal to about $1\ x\ 10^{-6}$ mol especially desired.

The catalyst may comprise a combination of compounds, preferably an alkaline compound and a nitrogen-containing basic compound, and more preferably an alkaline compound, a nitrogen-containing basic compound, and a boric acid compound. In both cases, the alkaline compound is preferable. Using a catalyst comprising a combination of an alkaline compound and a nitrogen-containing basic compound, in the above amounts, is preferred because such use allows the polycondensation reaction to proceed at an adequate velocity, resulting in a high-molecular weight polycarbonate with high polymerization activity.

When an alkaline compound and a nitrogen-containing basic compound are used together, or when an alkaline compound, a nitrogen-containing basic compound, and a boric acid compound are used together, the catalyst components may be added altogether to a molten mixture of bisphenol and carbonic acid diester, or the individual catalyst components may each be added separately.

The bisphenol and carbonic acid diester are melted and polycondensed in the presence of the aforementioned catalyst. The polycondensation can be carried out in two or more stages. Preferably, the bisphenol and the carbonic acid diester may be subjected to a first-stage reaction at a temperature of less than or equal to about 250°C, with less than or equal to about 230°C preferred, and less than or equal to about 190°C more preferred. Also preferred is a reaction temperature of greater than or equal to about 80°C, with greater than or equal to about 100°C preferred, and greater than or equal to about 120°C especially desired. A reaction time of less than or equal to about 5 hours is typically employed, with less than or equal to about 4 hours preferred, and less than or equal to about 3 hours more preferred. Also preferred is a reaction time of greater than or equal to about 0.01 hours, at normal pressure. The pressure may then be reduced, the temperature increased, and a reaction conducted between the bisphenol and carbonic acid diester. Finally, the bisphenol and carbonic acid diester may be polycondensed at a temperature of about 240°C to about 320°C, and at a pressure of less than or equal to about 5 mm Hg, and preferably less than or equal to about 1 mm Hg. The polycondensation reaction may be performed continuously or in batches. The reactor for performing the reaction may be in the form of a tank, a tube, or a column.

A polyfunctional compound having three or more functional groups per molecule may be used in addition to the bisphenol and the carbonic acid diester during polycarbonate production. The polyfunctional compound should be a compound having phenolic hydroxyl groups or carboxyl groups, preferably a compound having three phenolic hydroxyl groups. The polyfunctional compound can be 1,1, 1-tris(4-hydroxyphenyl)ethane, 2,2',2"-tris(4-hydroxyphenyl)diisopropylbenzene, α-methyl-α,α',α'-tris(4-hydroxyphenyl)-1,4-diethylbenzene,α,α',α"-tris(4-hydroxyphenyl)-1,3,5-triisopropylbenzene, fluoroglycine, 4,6-dimethyl-2,4,6-tri (4-hydroxyphenyl)-pentane-2, 1,3,5-tri(4-hydroxyphenyl)benzene, 2,2-bis-[4,4-(4,4'-dihydroxyphenyl)-cyclohexyl]-propane, trimellitic acid, 1,3,5-benzenetricarboxylic acid, pyromellitic acid, and the like, as well as combinations comprising at least one of the foregoing compounds of which, 1,1,1-tris(4-hydroxyphenyl)ethane, and α, α, α"-tris(4-hydroxyphenyl)-1,3,5-triisopropylbenzene are preferred.

The amount of polyfunctional compound used, per mol of bisphenol, is less than or equal to about 0.03 mol, with less than or equal to about 0.02 mol preferred, and less than or equal to about 0.01 mol more preferred. Also preferred is an amount of polyfunctional compound used, per mol of bisphenol, of greater than or equal to about 0.001.

An end blocker may also be used together with the aromatic dihydroxy compound and carbonic acid diester during polycarbonate production. The end blocker may comprise an allyloxy compound capable of introducing the end groups expressed by Formula [IV] below into the ends of the molecule of the resulting polycarbonate.

ArO- [IV]

wherein Ar is a $C_6$-$C_{50}$ aromatic hydrocarbon group. The aromatic hydrocarbon group is not limited in any particular way and may be a fused ring such as a phenyl, naphthyl, or anthranyl group, or a ring formed by these aromatic rings and saturated hydrocarbons and/or heteroatoms. These aromatic rings may also be substituted by halogens or $C_1$-$C_9$ alkyl groups.

Suitable allyloxy compounds include phenol, diphenyl carbonate, *p-tert*-butylphenol, *p-tert*-butylphenyl phenyl carbonate, *p-tert*-butylphenyl carbonate, *p*-cumylphenol, *p*-cumylphenyl phenyl carbonate, *p*-cumylphenyl carbonate, 2,2,4-trimethyl-4-(4-hydroxyphenyl)chroman, 2,2,4,6-tetramethyl-4-(3,5-dimethyl-4-hydroxyphenyl)chroman, 2,2,3-trimethyl-3-4-hydroxyphenyl)chroman, 2,2,3,6-tetraniethyl-3-(3,5-dimetliyl-4-hydroxyphenyl)chroman, 2,4,4-trimethyl-2-(2-hydroxyphenyl)chroman, 2,4,4,6-tetramethyl-2-(3,5-dimethyl-2-hydroxyphenyl)chroman, and other chromans, as well as combinations comprising at least one of the foregoing.

The amount of allyloxy compound used, per mol of aromatic dihydroxy compound, is less than or equal to about 0.2 mol, with less than or equal to about 0.15 mol preferred, and less than or equal to about 0.1 mol more preferred. Also preferred is an amount of allyloxy compound used, per mol of aromatic dihydroxy compound, of greater than or equal to about 0.01 mol, with greater than or equal to about 0.02 mol preferred.

Using allyloxy compounds as end blockers in these amounts allows the ends of the molecule of the resulting polycarbonate to be blocked with the end groups expressed by Formula [IV] above in a ratio of less than or equal to about 95%, with less than or equal to about 90% preferred. Also preferred is a ratio of greater than or equal to about 1%, with greater than or equal to about 10% preferred, and greater than or equal to about 20% especially desired. A polycarbonate with end groups represented by Formula [IV] has excellent heat resistance and possesses exceptional mechanical characteristics, such as shock resistance, even at low molecular weights.

In addition to allyloxy compounds, the end blockers may further comprise an aliphatic monocarboxylic compound capable of introducing aliphatic hydrocarbon units expressed by Formula [V]:

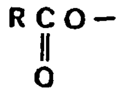

[V]

wherein R is a $C_{10}$-$C_{30}$ alkyl, which may be linear, branched, or halogen-substituted. Aliphatic monocarboxylic acids include undecanoic acid, lauric acid, tridecanoic acid, pentadecanoic acid, palmitic acid, heptadecanoic acid, stearic acid, nonadecanoic acid, heneicosanoic acid, tricosanoic acid, melissic acid, alkylmonocarboxylic acids, methyl, ethyl, phenyl, and other esters of the aforementioned alkylmonocarboxylic acids, such as methyl stearate, ethyl stearate, and phenyl stearate, as well as combinations comprising at least one of the foregoing acids.

The amount in which an aliphatic monocarboxylic compound is used, per mol of aromatic dihydroxy compound, is less than or equal to about 0.20 mol, with less than or equal to about 0.15 mol preferred, and less than or equal to about 0.10 mol more preferred. Also preferred is an amount in which an aliphatic monocarboxylic compound is used, per mol of aromatic dihydroxy compound, of greater than or equal to about 0.01 mol, with greater than or equal to about 0.02 mol preferred.

The rate of polymerization sometimes decreases if the end blockers are used in an amount of greater than or equal to about 0.2 mol per mol of aromatic dihydroxy compound. When measured in methyl chloride at 20°C, the intrinsic viscosity of the polycarbonate obtained is less than or equal to about 1.0 dL/g, with less than or equal to about 0.65 dL/g preferred. Also preferred is an intrinsic viscosity of greater than or equal to about 0.10 dL/g, with greater than or equal to about 0.30 dL/g preferred. The melt flow rate of the reaction product (polycarbonate) produced is about 1 g/10 min to about 70 g/10 min, preferably 2 g/10 min to about 50 g/10 min when measured at a temperature of 300°C and a load of 1.2 kg in the case of a high-viscosity product, and about 5 g/10 min to about 20 g/10 min, preferably 8 g/10 min to about 16 g/10 min when measured in the same manner at a temperature of 250°C and a load of 1.2 kg in the case of a low-viscosity product.

A sulfur-containing acidic compound, or a sulfur-containing acidic compound derivative, with a pKa value of less than or equal to about 3, can be added. Suitable sulfur-containing acidic compounds and derivatives (e.g., "acidic compounds") include sulfurous acid, sulfuric acid, sulfinic acid compounds, sulfonic acid compounds, and the like, as well as derivatives and combinations comprising at least one of the foregoing.

Sulfurous acid derivatives include dimethyl sulfite, diethyl sulfite, dipropyl sulfite, dibutyl sulfite, and diphenyl sulfite, as well as combinations comprising at least one of the foregoing sulfurous acid derivatives. Sulfuric acid derivatives include dimethyl sulfate, diethyl sulfate, dipropyl sulfate, dibutyl sulfate, and diphenyl sulfate, as well as combinations comprising at least one of the foregoing sulfuric acid derivatives. Sulfinic acid compounds include benzenesulfinic acid,

toluenesulfinic acid, and naphthalenesulfinic acid, as well as combinations comprising at least one of the foregoing sulfinic acid compounds. Suitable sulfonic acid compounds and derivatives include all compounds represented by the formula [VI] below, as well as ammonium salts, phosphonium salts, and combinations comprising at least one of the foregoing compounds.

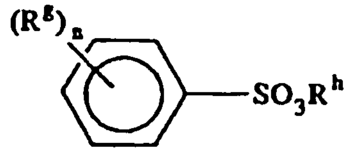

··· [IV]

[VI]

wherein $R^g$ is a $C_1$-$C_{50}$ hydrocarbon group or halogen-substituted hydrocarbon group, $R^h$ is a hydrogen atom or a $C_1$-$C_{50}$ hydrocarbon group or halogen-substituted hydrocarbon group, and n is an integer from 0 to 3.

Suitable sulfonic acid compounds and derivatives include benzenesulfonic acid, *p*-toluenesulfonic acid, hexylsulfonic acid, octylsulfonic acid, decylsulfonic acid, dodecylsulfonic acid, hexadecylsulfonic acid, and other sulfonic acids; methyl benzenesulfonate, ethyl benzenesulfonate, butyl benzenesulfonate, octyl benzenesulfonate, phenyl benzenesulfonate, methyl *p*-toluenesulfonate, ethyl *p*-toluenesulfonate, butyl *p*-toluenesulfonate, octyl *p*-toluenesulfonate, phenyl *p*-toluenesulfonate, and other ester derivatives of the aforementioned sulfonic acids; and the like, as well as ammonium salts, phosphonium salts, and combinations comprising at least one of the foregoing. Ammonium and phosphonium salts include tetramethylammonium salts of hexylsulfonic acid, tetraethylammonium salts of hexylsulfonic acid, tetrabutylammonium salts of hexylsulfonic acid, tetrahexylammonium salts of hexylsulfonic acid, tetraoctylammonium salts of hexylsulfonic acid, tetramethylammonium salts of octylsulfonic acid, tetraethylammonium salts of octylsulfonic acid, tetrabutylammonium salts of octylsulfonic acid, tetrahexylammonium salts of octylsulfonic acid, tetraoctylammonium salts of octylsulfonic acid, tetramethylammonium salts of decylsulfonic acid, tetraethylammonium salts of decylsulfonic acid, tetrabutylammonium salts of decylsulfonc acid, tetrahexylammonium salts of decylsulfonic acid, tetraoctylammonium salts of decylsulfonic acid, tetramethylammonium salts of dodecylsulfonic acid, tetraethylammonium salts of dodecylsulfonic acid, tetrabutylammonium salts of dodecylsulfonic acid, tetrahexylanmionium salts of dodecylsulfonic acid, tetraoctylammonium salts of dodecylsulfonic acid, tetramethylammonium salts of hexadecylsulfonic acid, tetraethylammonium salts of hexadecylsulfonic acid, tetrabutylammonium salts of hexadecylsulfonic acid, tetrahexylammonium salts of hexadecylsulfonic acid, tetraoctylammonium salts of hexadecylsulfonic acid, tetramethylammonium salts of benzenesulfonic acid, tetraethylammonium salts of benzenesulfonic acid, tetrabutylammonium salts of benzenesulfonic acid, tetrahexylammonium salts of benzenesulfonic acid, tetraoctylammonium salts of benzenesulfonic acid, tetramethylarnmonium salts of toluenesulfonic acid, tetraethylammonium salts of toluenesulfonic acid, tetrabutylammonium salts of toluenesulfonic acid, tetrahexylammonium salts of toluenesulfonic acid, tetraoctylammonium salts of toluenesulfonic acid, tetramethylammonium salts of dodecylbenzenesulfonic acid, tetraethylammonium salts of dodecylbenzenesulfonic acid, tetrabutylammonium salts of dodecylbenzenesulfonic acid, tetrahexylammonium salts of dodecylbenzenesulfonic acid, tetraoctylammonium salts of dodecylbenzenesulfonic acid, tetramethylphosphonium salts of hexylsulfonic acid, tetraethylphosphonium salts of hexylsulfonic acid, tetrabutylphosphonium salts of hexylsulfonic acid, tetrahexylphosphonium salts of hexylsulfonic acid, tetraoctylphosphonium salts of hexylsulfonic acid, tetramethylphosphonium salts of octylsulfonic acid, tetraethylphosphonium salts of octylsulfonic acid, tetrabutylphosphonium salts of octylsulfonic acid, tetrahexylphosphonium salts of octylsulfonic acid, tetraoctylphosphonium salts of octylsulfonic acid, tetramethylphosphonium salts of decylsulfonic acid, tetraethylphosphonium salts of decylsulfonic acid, tetrabutylphosphonium salts of decylsulfonic acid, tetrahexylphosphonium salts of decylsulfonic acid, tetraoctylphosphonium salts of decylsulfonic acid, tetramethylphosphonium salts of dodecylsulfonic acid, tetraethylphosphonium salts of dodecylsulfonic acid, tetrabutylphosphonium salts of dodecylsulfonic acid, tetrahexylphosphonium salts of dodecylsulfonic acid, tetraoctylphosphonum salts of dodecylsulfonic acid, tetramethylphosphonium salts of hexadecylsulfonic acid, tetraethylphosphonium salts of hexadecylsulfonic acid, tetrabutylphosphonium salts of hexadecylsulfonic acid, tetrahexylphosphonium salts of hexadecylsulfonic acid, tetraoctylphosphonium salts of hexadecylsulfonic acid, tetramethylphosphonium salts of benzenesulfonic acid, tetraethylphosphonium salts of benzenesulfonic acid, tetrabutylphosphonium salts of benzenesulfonic acid, tetrahexylphosphonium salts of benzenesulfonic acid, tetraoctylphosphonium salts of benzenesulfonic acid, tetramethylphosphonium salts of toluenesulfonic acid, tetraethylphosphonium salts of toluenesulfonic acid, tetrabutylphosphonium salts of toluenesulfonic acid, tetrahexylphosphonium salts of toluenesulfonic acid, tetraoctylphosphonium salts of toluenesulfonic acid, tetramethylphosphonium salts of dodecylbenzenesulfonic acid, tetraethylphosphonium salts of dodecylbenzenesulfonic acid, tetrabutylphosphonium salts of dodecylbenzenesulfonic acid, tetrahexylphosphonium salts of dodecylbenzenesulfonic acid, tetraoctylphosphonium salts of dodecylbenzenesulfonic acid, as well as combinations

comprising at least one of the foregoing salts. The ammonium salts may be $(CH_3)_3N^+$-$(CH_2)_{10}$-$N^+(CH_3)_3$, $(CH_3)_3N^+$-$(CH_2)_{15}$-$N^+(CH_3)_3$, $(CH_3)_3N^+$-$(CH_2)_{15}$-$N^+(CH_3)_3$, $(C_4H_9)_3N^+$-$(CH_2)_{10}$-N+$(C_4H_9)_3$, or other salts containing two or more nitrogen atoms, as well as combinations comprising at least one of the foregoing salts. The phosphonium salts may be $(C_4H_9)_3P^+$-$(CH_2)_{10}$-$P^+(C_4H_9)_3$, $(C_6H_5)_3P^+{}_4CH_2)_{10}$-$P^+(C_6H_5)_3$, or other salts containing two or more phosphorus atoms, as well as combinations comprising at least one of the foregoing salts.

It is also possible to use trifluoromethanesulfonic acid, naphthalenesulfonic acid, sulfonated polystyrene, methyl acrylate-sulfonated styrene copolymers, and other sulfonic acid compounds, as well as derivatives, ammonium salts, and phosphonium salts and combinations comprising at least one of the foregoing. Of these, the sulfonic acid compounds and derivatives expressed by Formula [VI] above are preferred as such acidic compounds.

Preferred are ester compounds for which the $R^g$ in Formula [VI] is a $C_1$-$C_6$ substituted aliphatic hydrocarbon group, the $R^h$ is a $C_1$-$C_8$ substituted aliphatic hydrocarbon group, and the *n* is an integer from 0 to 3. Examples of such compounds include ethyl benzenesulfonate, butyl benzenesulfonate, methyl *p*-toluenesulfonate, ethyl *p*-toluenesulfonate, and butyl *p*-toluenesulfonate, as well as combinations comprising at least one of the foregoing ester compounds. Particularly preferred are methyl *p*-toluenesulfonate, ethyl *p*-toluenesulfonate, and butyl *p*-toluenesulfonate, as well as combinations comprising at least one of the foregoing ester compounds.

An amount of acidic compound added to the reaction product is less than or equal to about 100 ppm, with less than or equal to about 30 ppm preferred. Also preferred is an amount of acidic compound added to the reaction product of greater than or equal to about 1 ppm, with greater than or equal to about 3 ppm more preferred. Adding an acidic compound to the polycarbonate neutralizes or weakens any alkaline compound catalyst remaining and terminates the polycondensation reaction. Terminating the polycondensation reaction in this manner makes it possible to obtain a polycarbonate composition with improved residence stability and water resistance. Adding greater than or equal to 100 ppm of the acidic compound facilitates side reactions (for which the acidic compound serves as a catalyst), has an adverse effect on the color tone, and occasionally reduces the thermal stability of the final composition. Reducing the amount of the acidic compound to less than 1 ppm or completely dispensing with the addition of the acidic compound makes controlling of the polycondensation process less stable and sometimes fails to ensure adequate removal of any remaining monomers.

The addition of an acidic compound is followed by a process in which the system is stirred at a reduced pressure. The reduced-pressure conditions and heating conditions maintained during the addition of the acidic compound are no different from those adopted for the polycondensation of the polycarbonate; that is, a temperature of about 240°C to about 320°C may be maintained at a pressure of less than or equal to about 5 mm Hg (millimeter of mercury), preferably less than or equal to about 1 mm Hg. The monomers and other components remaining in the reaction product are thereby removed.

Phosphorous acid, a second sulfur-containing acidic compound or derivative with a pKa value of less than or equal to about 3, an alcohol compound containing ester groups, and water are added and kneaded immediately after the polycarbonate composition has been obtained. The phosphorous acid may be a salt such as a sodium or potassium salt. The amount in which phosphorous acid is added should be less than or equal to about 10 ppm, with less than or equal to about 5 ppm preferred in relation to the polycarbonate composition. Also preferred is an amount in which phosphorous acid is added of greater than or equal to about 0.1 ppm, with greater than or equal to about 0.2 ppm more preferred. Adding phosphorous acid in this amount prevents the heavy metal ions introduced as impurities from having a detrimental effect on the product.

The same compounds as those described with reference to the acidic compound contained in the polycarbonate composition may also be cited as examples of the second sulfur-containing acidic compound or derivative (henceforth referred to as "acidic compound ") with a pKa value of less than or equal to about 3. The acidic compound may be the same as the acidic compound contained in the polycarbonate composition, or it may be a different compound. The amount in which the acidic compound is added to the polycarbonate composition should be less than or equal to about 5 ppm, with less than or equal to about 3 ppm preferred. Also preferred is an amount in which the acidic compound is added to the polycarbonate composition of greater than or equal to about 0.5 ppm, with greater than or equal to about 1 ppm preferred. After the acidic compound has been added, in order to deactivate the melt polycondensation catalyst, the heat-induced discoloration of polycarbonate during molding is minimized by further adding the acidic compound in a specific amount.

The alcohol compound containing ester groups is a partial ester derived from a polyhydric alcohol and a $C_{10}$-$C_{22}$ monobasic fatty acid, such as an individual partial ester or a combination of esters derived from polyhydric alcohols including ethylene glycol, glycerol, pentaerythritol, and the like and $C_{10}$-$C_{22}$ monobasic fatty acids including myristic acid, palmitic acid, stearic acid, oleic acid, behenic acid, fatty acids of sulfated fish oil, and the like. The corresponding esterification rate should be, if this rate is 100% for a completely esterified polyhydric alcohol, less than or equal to about 80%, with less than or equal to about 60% preferred. Also preferred is an esterification rate of greater than or equal to about 10%, with greater than or equal to about 20% preferred.

The alcohol compound containing ester groups may be a complete or partial condensate. The alcohol compound

containing ester groups should be added to the mixture in an amount of about 50 ppm to about 1,000 ppm. Within this range, an addition of less than or equal to about 800 ppm is preferred. Also within this range is an amount of alcohol compound containing ether groups added of greater than or equal to about 100 ppm more preferred. The alcohol compound containing ester groups functions as a release agent for the optical polycarbonate composition, allowing for the production of molded articles with improved release properties during molding, and resulting in higher productivity. Adding less than 50 ppm of the alcohol compound containing ester groups has an adverse effect on the release properties during melt molding and causes clouding in the molded articles or creates optical strain due to release strain. Adding more than 1,000 ppm of the alcohol compound containing ester groups brings about pyrolysis during melt molding, which occasionally induces silver streaks in molded articles or contamination to occur in the substrate or stamper.

Water is added to the mixture in an amount of about 5 ppm to about 3,000 ppm. Within this range, an amount of water of less than or equal to about 1,000 ppm is preferred. Also preferred within this range is an amount of water of greater than or equal to about 50 ppm preferred. Adding water in an amount greater than 3,000 ppm facilitates polycarbonate hydrolysis and tends to have an adverse effect on the physical properties of the polycarbonate.

Adding water in a specific amount makes it possible to increase the content of the alcohol compound containing ether groups in the mixture, thus allowing the alcohol compound containing ether groups to fully perform its function as a release agent and to yield a polycarbonate composition designed for optical applications with exceptional release properties and minimal mold contamination. Although no satisfactory explanation has yet been found for the mechanism whereby the addition of a specific amount of water increases the amount in which the alcohol compound containing ether groups remains in the polycarbonate composition, it is believed that the addition of water together with an acidic compound reduces the extent to which the acidic compound degrades the alcohol compound containing ether groups. Adding water in advance during the initial addition of acidic compound fails to yield the same effect as if the water is removed together with unreacted monomers.

Phosphorous acid, a second sulfur-containing acidic compound, an alcohol compound containing ester groups, and water are added and kneaded while the mixture is in the molten state, yielding a polycarbonate composition for optical applications. Specifically, phosphorous acid, a second sulfur-containing acidic compound, an alcohol compound containing ester groups, and water are added while the mixture is kept in the molten state in a reactor or extruder. The addition of phosphorous acid, a second sulfur-containing acidic compound, an alcohol compound containing ester groups, and water is not limited in terms of addition sequence and each can be added separately or concurrently, although concurrent addition is preferred. The resulting polycarbonate composition for optical applications is preferably pelletized.

The polycarbonate composition and the added phosphorous acid, second sulfur-containing acidic compound, alcohol compound containing ester groups, and water may be kneaded together in a single-screw extruder, twin-screw extruder, static mixer, or other common kneader, which can be efficiently used with or without a vent. Specific examples of processes in which phosphorous acid, a second sulfur-containing acidic compound, an alcohol compound containing ester groups, and water are added and kneaded in this manner while the mixture is in the molten state include those in which phosphorous acid, a second sulfur-containing acidic compound, an alcohol compound containing ester groups, and water are added to the mixture produced by polycondensating in a reactor, and the product is then pelletized with an extruder, and those in which phosphorous acid, a second sulfur-containing acidic compound, an alcohol compound containing ester groups, and water are added and kneaded while the mixture is pelletized with an extruder.

At least one additional compound comprising phosphorous acid esters and trimethyl phosphate, as well as combinations comprising at least one of the foregoing, is added in addition to the additives. The additional compound should be added to the polycarbonate composition in an amount of less than or equal to about 1,000 ppm, with less than or equal to about 500 ppm preferred and less than or equal to about 300 more preferred. Also preferred is an amount of greater than or equal to about 10 ppm, with greater than or equal to about 30 more preferred.

Phosphorous acid esters represented by the following formula [VII] can be used:

$$P(OR)_3 \qquad [VII]$$

wherein, R is an alicyclic, aliphatic, or aromatic hydrocarbon group. These groups may be the same or different.

Phosphorous acid esters include trimethyl phosphite, triethyl phosphite, tributyl phosphite, trioctyl phosphite, tris(2-ethylhexyl)phosphite, trinonyl phosphite, tridecyl phosphite, trioctadecyl phosphite, tristearyl phosphite, tris(2-chloroethyl)phosphite, tris(2,3-dichloropropyl)phosphite, and other trialkyl phosphites; tricyclohexyl phosphite and other tricycloalkyl phosphites; triphenyl phosphite, tricresyl phosphite, tris(ethylphenyl)phosphite, tris(2,4-di-*t*-butylphenyl) phosphite, tris(nonylphenyl) phosphite, tris(hydroxyphenyl) phosphite, and other triaryl phosphites; and phenyldidecyl phosphite, diphenyldecyl phosphite, diphenylisooctyl phosphite, phenylisooctyl phosphite, 2-ethylhexyldiphenyl phosphite, and other arylalkyl phosphites,distearyl pentaerythrityl diphosphite, bis(2,4-di-*t*-butylphenyl)pentaerythrityl diphosphite, and the like, as well as combinations comprising at least one of the foregoing compounds. Trimethyl phosphate or a phosphorous acid ester expressed by formula [VII] above is preferred, an aromatic phosphorous acid ester is particularly preferred, and tris(2,4-di-*t*-butylphenyl)phosphite is especially preferred.

Additives may be added to the polycarbonate composition. The additives may be added separately from the additional compound and the phosphorous acid, second sulfur-containing acidic compound, alcohol compound containing ester groups, and water to the molten polycarbonate, or all of these components may be added at the same time. Of the additional additives, those that are reactive should preferably be added after the acidic compound has been added.

Additives include those that can be added to polycarbonates, including heat stabilizers, epoxy compounds, UV absorbers, release agents, colorants, antistatic agents, slip agents, antiblocking agents, lubricants, anticlouding agents, natural oils, synthetic oils, waxes, organic fillers, inorganic fillers, and the like, as well as combinations comprising at least one of the foregoing additives, of which heat stabilizers, epoxy compounds, UV absorbers, release agents, and colorants are preferred.

EXAMPLE 1

Bisphenol A, in the form of a 0.2-μm (micrometer) filtrate (product of GE Plastics Japan; chlorine: 0.1 ppm or less; iron: 0.1 ppm or less; sodium: 0.1 ppm or less; sulfur: 0.1 ppm or less), and diphenyl carbonate (product of EniChem; chlorine: 0.1 ppm or less; iron: 0.1 ppm or less; sodium: 0.1 ppm or less; sulfur: 0.1 ppm or less) were added to a first 250 -L (liter) stirred tank in amounts of 0.44 kmol (kilomoles) and 0.449 kmol, respectively; the components were dissolved at 140°C; and the mixed solution was fed to a second 50-L stirred tank at a rate of 0.16 kmol per hour (in terms of bisphenol A) while the bisphenol A and diphenyl carbonate were fed at rates of 0.16 kmol per hour and 0.163 kmol per hour, respectively, in order to maintain the same level. The stirred tank was kept at a temperature of 180°C.

Tetramethylammonium hydroxide and sodium hydroxide were added as catalysts at rates of 0.04 mol per hour and 0.00016 mol per hour ($1 \times 10^{-6}$ mol per mol bisphenol A), respectively. The level was adjusted to a residence time of 30 min, and the system was stirred. The reaction solution was then fed at a rate of 0.16 kmol per hour (in terms of bisphenol A) to a third 50-L stirred tank with a temperature of 210°C and a pressure of 200 mm Hg. The level was adjusted to a residence time of 30 minutes, and the system was stirred while the phenol was distilled out.

The reaction solution was then fed at a rate of 0.16 kmol per hour (in terms of bisphenol A) to a fourth 50-L stirred tank with a temperature of 240°C and a pressure of 15 mm Hg. The level was adjusted to a residence time of 30 minutes, and the system was stirred while the phenol was distilled out. The intrinsic viscosity [η] of the reaction product (obtained when the reaction was brought to a steady state) was 0.15 dL/g.

The pressure of the reaction product was then raised by a gear pump, the material was pumped to a centrifugal thin-film evaporator at a rate of 0.16 kmol per hour (in terms of bisphenol A), and a reaction was conducted. The temperature and pressure of the thin-film evaporator was kept at 270°C and 2 mm Hg, respectively. The material was pumped by a gear pump at a rate of 0.16 kmol per hour, or about 40 kg/hour (in terms of bisphenol A), through the bottom of the evaporator to a biaxial horizontal stirred polymerization tank (L/D = 3; rotational diameter of mixing blade: 220 mm; capacity: 80 L) kept at 270°C and 0.2 nun Hg; and polymerized at a residence time of 30 minutes. The intrinsic viscosity of the resulting polymer was 0.35 dL/g, and the ratio of phenol end groups to hydroxyl end groups was 91/9.

Butyl *p*-toluenesulfonate was added in an amount of 4 ppm as the final step, and the system was stirred at a reduced pressure, yielding a polycarbonate composition. While it was still in the molten state, the polycarbonate composition was fed by a gear pump to a biaxial extruder. Phosphorous acid, butyl *p*-toluenesulfonate, glycerin monostearate (GMS), purified water, and trisnonylphenyl phosphate (phosphite) were simultaneously added to the carbonate composition in the amounts of 2 ppm, 1 ppm, 200 ppm, 50 ppm, and 50 ppm, respectively; the components were melted and kneaded; and the material was extruded from an extruder, yielding a pelletized polycarbonate resin composition for optical applications.

The GMS in the resulting polycarbonate composition for optical applications was silylated, and the GMS content of the resin composition was determined by gas chromatography. Specifically, the GMS content was measured in the following manner:

(1) A pellet sample (5.00 g) was first metered out into a 100-mL ground-stopper conical flask and dissolved with 15 mL of methyl chloride.

(2) An internal standard (pyrene) was then added in an amount of 10 mL, *n*-hexane (60 mL) was also added, and the resin was precipitated.

(3) The liquid phase was taken with an injector from the resulting suspended resin precipitate, filtered to remove the solids, and concentrated in a nitrogen atmosphere to obtain an exsiccated product.

(4) Methyl chloride was added to the resulting concentrate to dissolve the precipitate, the product was re-exsiccated in a nitrogen atmosphere, and the resulting material was dried in a vacuum.

(5) After the material had been dried, a silylation agent (TMS I-H) was added in an amount of 2 mL, the system was heated, and a silylated derivative was prepared.

(6) The silylated derivative solution thus prepared was filtered, and measurements were performed using a gas chromatograph (GC-14A).

The pelletized polycarbonate resin composition thus obtained was used to mold CDs with a diameter of 120 mm in 10,000 shots at a cylinder temperature of 340°C and a mold temperature of 100°C, and the residue deposited on the mold was measured and used as a mold contamination index.
Additionally, the pelletized polycarbonate composition was molded into CDs with a diameter of 120 mm at a cylinder temperature of 380°C, and the discoloration of the CDs before and after standing at 380°C for 10 minutes was evaluated based on Delta YI as a measure of color tone stability. Delta YI is expressed by the following formula:

$$\text{Delta YI} = \text{YI (maximum YI after standing)} - \text{YI (initial YI before standing)}$$

EXAMPLES 2-7

Pelletized polycarbonate resin compositions for optical applications were prepared and evaluated in the same manner as in Example 1 except that the additives of Example 1 were used in different amounts as is shown in Table 1.

Table 1

| | | Example 1 | Example 2 | Example 3 | Example 4 | Example 5 | Example 6 | Example 7 |
|---|---|---|---|---|---|---|---|---|
| Polycarbonate composition | *p*-Butyl toluenesulfonate (ppm) | 4 | 4 | 4 | 4 | 4 | 4 | 4 |
| | Addition time of acidic compounds | Final step of melt polycondensation | | | | | | |
| Additives | Phosphorous acid (ppm) | 2 | 2 | 2 | 2 | 2 | 2 | 2 |
| | *p*-Butyl toluenesulfonate (ppm) | 1 | 2 | 2 | 2 | 2 | 3 | 2 |
| | GMS (ppm) | 200 | 400 | 200 | 200 | 400 | 400 | 400 |
| | Water (ppm) | 50 | 100 | 100 | 200 | 470 | 470 | 470 |
| | Phosphite (ppm) | 50 | 0 | 100 | 0 | 100 | 0 | 0 |
| | Addition time | When in molten state after melt polycondensation reaction | | | | | | |
| GMS content of polycarbonate resin composition for optical applications (ppm) | | 125 | 270 | 130 | 125 | 285 | 290 | 285 |
| Mold contamination after 10,000 shots (mg) | | 7.9 | 12.9 | 6.2 | 6 | 7.1 | 7 | 8.8 |
| Discoloration during standing and molding (delta YI) | | 0.58 | 1.78 | 0.65 | 0.52 | 2.08 | 1.4 | 1.52 |

COMPARATIVE EXAMPLES 1-5

Pelletized polycarbonate resin compositions for optical applications were prepared and evaluated in the same manner as in Example 1 except that the additives of Example 1 were used in varying amounts as shown in Table 2.

Table 2

| | | Comparative Example 1 | Comparative Example 2 | Comparative Example 3 | Comparative Example 4 | Comparative Example 5 |
|---|---|---|---|---|---|---|
| Polycarbonate composition | *p*-Butyl toluenesulfonate (ppm) | 4 | 4 | 4 | 4 | 4 |
| | Water (ppm) | - | - | - | - | - |
| | Addition time of water and acidic compounds | Final step of melt polycondensation | | | | |
| Additives | Phosphorous acid (ppm) | 2 | 2 | 2 | 2 | 2 |
| | *p*-Butyl toluenesulfonate (ppm) | 0 | 0 | 2 | 2 | 2 |
| | GMS (ppm) | 200 | 200 | 200 | 200 | 400 |
| | Water (ppm) | 0 | 0 | 0 | 0 | 0 |
| | Phosphite (ppm) | 0 | 100 | 0 | 100 | 100 |
| | Addition time | When in molten state after melt polycondensation reaction | | | | |
| GMS content of polycarbonate resin composition for optical applications (ppm) | | 95 | 95 | 75 | 75 | 210 |
| Mold contamination after 10,000 shots (mg) | | 4.5 | 9 | 5.1 | 12.4 | 17.6 |
| delta YI | | 1.54 | 2.15 | 1.32 | 1.8 | 2.7 |

The polycarbonate resin compositions obtained in Examples 1-7 had high GMS content and contaminated the mold only slightly after 10,000 shots. Excellent color tone stability was also obtained.

By contrast, the polycarbonate resin compositions obtained in Comparative Examples 1-3, while producing minimal mold contamination, had inadequate color tone stability and underwent considerable yellowing after standing at 380°C for 10 minutes. The polycarbonate resin compositions obtained in Comparative Examples 4 and 5 produced considerable mold contamination, had inadequate moldability, and exhibited inferior color tone stability.

The polycarbonate composition for optical applications obtained by such a manufacturing method can be used not only as an ordinary molding material but also as a building material for sheets or the like; an optical lens for automobile headlights, glasses, and the like; a recording material for optical applications; and a material for other types of applications. The composition is particularly suitable as a molding material for optical disks.

A polycarbonate composition, exhibiting excellent moldability and color tone stability during molding may be produced with high efficiency. The composition is suitable for optical materials, and particularly as a molding material for optical disks. The contamination of molds with release agents is minimized, thereby allowing for compositions with excellent color tone stability ideal for optical applications.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

**Claims**

1. Method for manufacturing a polycarbonate composition comprising:

   melting bisphenol and carbonic acid diester to form a melt;
   polycondensing said melt in the presence of a catalyst, to form a molten polycondensed mixture;
   adding a sulfur-containing compound with a pKa value of less than or equal to 3 to said molten polycondensed mixture;
   stirring said molten polycondensed mixture;
   adding phosphorous acid, a second sulfur-containing acidic compound, an alcohol compound containing ester groups, and water to said molten polycondensed mixture to form a polycarbonate composition; and
   kneading said polycarbonate composition.

2. The method of Claim 1, wherein said bisphenol comprises a compound of the formula:

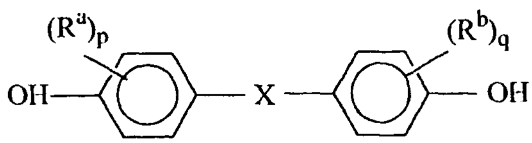

3. The method of Claim 2, wherein said bisphenol comprises bisphenol A.

4. The method of Claim 1, wherein said carbonic acid diester is diphenyl carbonate.

5. The method of Claim 1, wherein amount of said carbonic acid diester, per mol of bisphenol, is 1.00 mol to 1.30 mol.

6. The method of Claim 1, wherein said catalyst comprises an alkaline compound selected from the group consisting of alkali metal compounds, alkaline-earth metal compounds, and combinations comprising at least one of the foregoing alkaline compounds; or a basic compound selected from the group consisting of tetramethylammonium hydroxide, tetraethylammonium hydroxide, tetrabutylammonium hydroxide, trimethylbenzylammonium hydroxide, ammonium hydroxides; trimethylamine, triethylamine, dimethylbenzylamine, triphenylamine, tertiary amines; secondary amines; primary amines; 4-dimethylaminopyridine, 4-diethylaminopyridine, 4-pyrrolidinopyridine, pyridines; 2-methylimidazole, 2-phenylimidazole, imidazoles; ammonia, tetramethylammonium borohydride, tetrabutylammonium borohydride, tetrabutylammonium tetraphenyl borate, tetramethylammonium tetraphenyl borate, basic salts, and combinations comprising at least one of the foregoing basic compounds; or a boric acid compound selected from the group consisting of boric acids, borate esters, and combinations comprising at least one of the foregoing compounds.

**7.** The method of Claim 1, wherein said catalyst comprises an alkaline compound, a basic compound, and a boric acid compound.

**8.** The method of Claim 1, further comprising melting a polyfunctional compound to form the melt, wherein said polyfunctional compound is selected from the group consisting of 1,1,1-tris(4-hydroxyphenyl)ethane, 2,2',2"-tris(4-hydroxyphenyl)diisopropylbenzene, α-methyl-α,α',α'-tris(4-hydroxyphenyl)-1,4-diethylbenzene, α,α',α"-tris(4-hydroxyphenyl)-1,3,5-triisopropylbenzene, fluoroglycine, 4,6-dimethyl-2,4,6-tri (4-hydroxyphenyl)-pentane-2, 1,3,5-tri(4-hydroxyphenyl)benzene, 2,2-bis-[4,4-(4,4'-dihydroxyphenyl)-cyclohexyl]-propane, trimellitic acid, 1,3,5-benzenetricarboxylic acid, pyromellitic acid, and combinations comprising at least one of the foregoing compounds.

**9.** The method of Claim 1, further comprising melting an end blocker to form the melt, wherein said end blocker is an alyloxy compound selected from the group consisting of phenol, diphenyl carbonate, *p-tert*-butylphenol, *p-tert*-butylphenyl phenyl carbonate, *p-tert*-butylphenyl carbonate, *p*-cumylphenol, *p*-cumylphenyl phenyl carbonate, *p*-cumylphenyl carbonate, 2,2,4-trimethyl-4-(4-hydroxyphenyl)chroman, 2,2,4,6-tetramethyl-4-(3,5-dimethyl-4-hydroxyphenyl)chroman, 2,2,3-trimethyl-3-4-hydroxyplienyl)chroman, 2,2,3,6-tetramethyl-3-(3,5-dimethyl-4-hydroxyphenyl)chroman, 2,4,4-trimethyl-2-(2-hydroxyphenyl)chroman, 2,4,4,6-tetramethyl-2-(3,5-dimethyl-2-hydroxyphenyl)chroman, and combinations comprising at least one of the foregoing allyloxy compounds.

**10.** The method of Claim 1, further comprising adding a component selected from the group consisting of phosphorous acid esters, trimethyl phosphate, and combinations comprising at least one of the foregoing components.

**Patentansprüche**

**1.** Verfahren zur Herstellung einer Polycarbonatzusammensetzung, das folgendes umfaßt:

Schmelzen von Bisphenol und Carbonsäurediester, um eine Schmelze zu bilden;
Polykondensieren der Schmelze in der Anwesenheit eines Katalysators, um eine geschmolzene polykondensierte Mischung zu bilden;
Hinzufügen einer Schwefel-enthaltenden Verbindung mit einem pKa Wert von weniger als oder gleich 3 zu der geschmolzenen polykondensierten Mischung;
Rühren der geschmolzenen polykondensierten Mischung;
Hinzufügen von Phosphonsäure, einer zweiten Schwefel-enthaltenden sauren Verbindung, einer Alkoholverbindung enthaltend Estergruppen, und Wasser, zu der geschmolzenen polykondensierten Mischung, um eine Polycarbonatzusammensetzung zu bilden; und
Kneten der Polycarbonatzusammensetzung.

**2.** Das Verfahren von Anspruch 1, worin das Bisphenol eine Verbindung der folgenden Formel umfaßt:

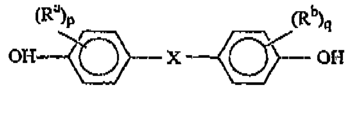

**3.** Das Verfahren von Anspruch 2, worin das Bisphenol Bisphenol A umfaßt.

**4.** Das Verfahren von Anspruch 1, worin der Carbonsäurediester Diphenylcarbonat ist.

**5.** Das Verfahren von Anspruch 1, worin die Menge des Carbonsäurediesters, pro Mol von Bisphenol, 1,00 Mol bis 1,30 Mol ist.

6. Das Verfahren von Anspruch 1, worin der Katalysator eine alkalische Verbindung umfaßt, gewählt aus der Gruppe bestehend aus Alkalimetallverbindungen, Erdalkalimetallverbindungen, und Kombinationen, umfassend mindestens eine der zuvor erwähnten alkalischen Verbindungen; oder eine basische Verbindung gewählt aus der Gruppe bestehend aus Tetramethylammoniumhydroxid, Tetxaethylammoniumhydroxid, Tetrabutylammoniumhydroxid, Trimethylbenzylammoniumhydroxid, Ammoniumhydroxide; Trimethylamin, Triethylamin, Dimethylbenzylamin, Triphenylamin, tertiäre Amine; sekundäre Amine; primäre Amine; 4-Dimethylaminopyridin, 4-Diethylaminopyridin, 4-Pyxrolidinopyridin, Pyridine; 2-Methylimidazol, 2-Phenylimidazol, Imidazole; Ammoniak, Tetramethylammoniumborhydrid, Tetrabutylammoniumborhydrid, Tetrabutylammoniunttetraphenylborat, Tetramethylammoniumtetraphenylborat, basischen Salzen und Kombinationen, umfassend mindestens eine der zuvor erwähnten basischen Verbindungen; oder eine Borsäureverbindung, gewählt aus der Gruppe bestehend aus Borsäuren, Boratestern und Kombinationen, umfassend mindestens eine der zuvor erwähnten Verbindungen.

7. Das Verfahren von Anspruch 1, worin der Katalysator eine alkalische Verbindung, eine basische Verbindung und eine Borsäureverbindung umfaßt.

8. Das Verfahren von Anspruch 1, das weiter das Schmelzen einer polyfunktionalen Verbindung umfasst, um die Schmelze zu bilden, worin die polyfunktionale Verbindung gewählt ist aus der Gruppe bestehend aus 1,1,1-tris(4-Hydrqxyphenyl) ethan, 2,2',2''-tris (4-Hydroxyphenyl)diisopropylbenzen, $\alpha$-Methyl-$\alpha$,$\alpha$',$\alpha$'-tris(4-Hydroxyphenyl)-1,4-diethylbenzen, a,a',a"-tris(4-Hydroxyphenyl)-1,3,5-triisopropylbenzen, Fluorglycin, 4,6-dimethyl-2,4,6-tri (4-Hydroxyphehyl)-gentan-2, 1,3,5-tri(4-Hydroxyphenyl)benzen, 2,2-bis-[4,4-(4,4'-Dihydroxypheayl)-cyclohexyl]-propan, Trimellithsäure, 1,3,5-Benzentricarbonsäure, Pyromellithsäure, und Kombinationen umfassend mindestens eine der zuvor erwähnten Verbindungen.

9. Das Verfahren von Anspruch 1, das weiter das Schmelzen eines Endblockers umfasst, um die Schmelze zu bilden, worin der Endblocker eine Allyloxyverbindung ist, gewählt aus der Gruppe bestehend aus Phenol, Diphenylcarbonat, *p-tert*-Butylphenol, *p-tert*-Butylphenylphenylcarbonat, *p-tert*-Butylphenylcarbonat, *p*-Cumylphenol, *p*-Cumylphenylphenylcarbonat, *p*-Cumylphenylcarbonat, 2,2,4-Trimethyl-4-(4-hydroxyphenyl)chroman, 2,2,4,6-Tetramethyl-4-(3,5-dimethyl-4-hydroxyphenyl)chroman, 2,2,3-Trimethyl-3-4-hydroxyphenyl)chroman, 2,2,3,6-Tetramethyl-3-(3,5-dimethyl-4-hydroxyphenyl)chroman, 2,4,4-Trimethyl-2-(2-hydroxyphenyl)chroman, 2,4,4,6-Tetramethyl-2-(3,5-dimethyl-2-hydroxyphenyl)chroman und Kombinationen, umfassend mindestens eine der zuvor erwähnten Allyloxyverbindungen.

10. Das Verfahren von Anspruch 1, das weiter das Hinzufügen einer Komponente umfasst, gewählt aus der Gruppe bestehend aus Phosphonsäurestern, Trimethylphosphat und Kombinationen, umfassend mindestens eine der zuvor erwähnten Komponenten.

**Revendications**

1. Procédé de fabrication d'une composition de poly(carbonate) comprenant :

   la fusion d'un bisphénol et d'un diester d'acide carbonique pour former un produit fondu ;
   la polycondensation dudit produit fondu en présence d'un catalyseur pour former un mélange polycondensé fondu ;
   l'ajout d'un composé contenant du soufre avec une valeur pKa inférieure ou égale à 3 audit mélange polycondensé fondu ;
   l'agitation dudit mélange polycondensé fondu ;
   l'ajout d'acide phosphorique, d'un second composé acide contenant du soufre, d'un composé alcool contenant des groupes ester et d'eau audit mélange polycondensé fondu pour former une composition de poly(carbonate) ; et
   le malaxage de ladite composition de poly(carbonate).

2. Procédé selon la revendication 1, dans lequel ledit bisphénol comprend un composé de formule :

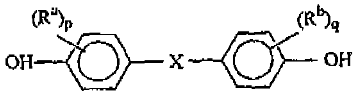

3. Procédé selon la revendication 2, dans lequel ledit bisphénol comprend le bisphénol A.

4. Procédé selon la revendication 1, dans lequel ledit diester d'acide carbonique est le carbonate de diphényle.

5. Procédé selon la revendication 1, dans lequel la quantité dudit diester d'acide carbonique, par mol de bisphénol, est d'environ 1,00 mol à 1,30 mol.

6. Procédé selon la revendication 1, dans lequel ledit catalyseur comprend un composé alcalin choisi dans le groupe constitué par des composés de métaux alcalins, des composés de métaux alcalino-terreux et des combinaisons comprenant au moins un des composés alcalins précités ; ou un composé basique choisi dans le groupe constitué par l'hydroxyde de tétraméthylammonium, l'hydroxyde de tétraéthylammonium, l'hydroxyde de tétrabutylammonium, l'hydroxyde de triméthylbenzylammonium, les hydroxydes d'ammonium ; la triméthylamine, la triéthylamine, la diméthylbenzylamine, la triphénylamine, les amines tertiaires ; les amines secondaires ; les amines primaires ; la 4-diméthylaminopyridine, la 4-diéthylaminopyridine, la 4-pyrrolidinopyridine, les pyridines ; le 2-méthylimidazole, le 2-phénylimidazole, les imidazoles ; l'ammoniaque, le borohydrure de tétraméthylammonium, le borohydrure de tétrabutylammonium, le tétraphényl borate de tétrabutylammonium, le tétraphényl borate de tétraméthylammonium, les sels basiques, et les combinaisons comprenant au moins un des composés basiques précités ; ou un composé d'acide borique choisi dans le groupe constitué par les acides boriques, les esters de borate et des combinaisons comprenant au moins l'un des composés précités.

7. Procédé selon la revendication 1, dans lequel ledit catalyseur comprend un composé alcalin, un composé basique et un composé d'acide borique.

8. Procédé selon la revendication 1, comprenant en outre la fusion d'un composé polyfonctionnel pour former le produit fondu, dans lequel ledit composé polyfonctionnel est choisi dans le groupe constitué du 1,1,1-tris(4-hydroxyphényl) éthane, du 2,2',2"-tris(4-hydroxyphényl)diisopropylbenzène, de l'α-méthyl-α, α',α'-tris(4-hydroxyphényl).-1,4-diéthylbenzène, de l'α,α',α,"-tris(4-hydroxyphényl)-1,3,5-triisopropylbenzène, de la fluoroglycine, du 4,6-diméthyl-2,4,6-tri(4-hydroxyphényl)-pentane-2, du 1.3,5-tri(4-hydroxyphényl)benzène, du 2,2-bis-[4,4-(4,4'dihydroxyphényl)-cyclohexyl]-propane, de l'acide trimellitique, de l'acide 1,3,5-benzèrietricarboxylique, de l'acide pyromellitique, et des combinaisons comprenant au moins un des composés précités.

9. Procédé selon la revendication 1, comprenant en outre la fusion d'un agent de blocage d'extrémité pour former le produit fondu, dans lequel ledit agent de blocage d'extrémité est un composé allyloxy choisi dans le groupe constitué d'un phénol, du carbonate de diphényle, du *p-tert*-butylphénol, du carbonate de *p-tert*-butylphényl-phényle, du carbonate de p-tert-butylphényle, du *p*-cumylphénol, du carbonate de p-cumulphényl phényle, du carbonate de *p*-cumulphényle, du 2,2,4-triméthyl-4-(4-hydroxyphényl)chromane, du 2,2,4,6-tétraméthyl-4-(3,5-diméthyl-4-hydroxyphényl)chromane, du 2,2,3-triméthyl-3,4-hydroxyphényl)chromane, du 2,2,3,6-tétraméthyl-3-(3,5-diméthyl-4-hydroxyphényl)chromane, du 2,4,4-triméthyl-2-(2-hydroxyphényl)chromane, du 2,4,4,6-tétraméthyl-2-(3,5-diméthyl-2-hydroxyphényl)chromane, et des combinaisons comprenant au moins l'un des composés allyloxy précités.

10. Procédé selon la revendication 1, comprenant en outre l'ajout d'un composant choisi dans le groupe constitué par les esters d'acide phosphoreux, le phosphate de triméthyle et les combinaisons comprenant au moins l'un des composants précités.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10060247 A
- JP 4081457 A
- JP 4175368 A
- JP 4328156 A
- JP 5262969 A
- JP 2000169690 A